Europäisches Patentamt

European Patent Office

Office européen des brevets

(18)

(11) Publication number: **0 051 979**
**B1**

(12) **EUROPEAN PATENT SPECIFICATION**

(45) Date of publication of patent specification: **26.09.84**

(51) Int. Cl.³: **B 23 K 35/30, C 22 C 19/05**

(21) Application number: **81305246.1**

(22) Date of filing: **04.11.81**

(54) **Nickel-base welding alloy.**

(30) Priority: **10.11.80 US 205616**

(43) Date of publication of application:
**19.05.82 Bulletin 82/20**

(45) Publication of the grant of the patent:
**26.09.84 Bulletin 84/39**

(84) Designated Contracting States:
**AT CH DE FR GB LI SE**

(56) References cited:
**CH-A- 267 448**
**FR-A-2 004 465**
**FR-A-2 391 286**
**US-A-3 181 970**

**AUTOMATIC WELDING, vol. 31, no. 9,
September 1978 CAMBRIDGE (GB) G.S.
KUZ'MIN et al.: "The Effects on Weld Density of
Alloying Elements in Nickel" pages 16-19**
**AUTOMATIC WELDING, vol. 31, no. 10,
October 1978 CAMBRIDGE (GB) K.A.
YUSHCHENKO et al.: "The Effects of Alloying
Elements on the Properties of Nickel-Base
Alloys, and of Welded Joints in them, at Low
Temperatures" pages 27-30**

(73) Proprietor: **HUNTINGTON ALLOYS, INC.
Huntington West Virginia 25720 (US)**

(72) Inventor: **Hunt, James Patrick
181 Edison Drive
Huntington West Virginia 25705 (US)**

(74) Representative: **Lockwood, Barbara Ann et al
Thames House (Fifth Floor) Millbank
London SW1P 4QF (GB)**

## Description

The present invention relates to an alloy for welding nickel-based alloys.

U.K. Patent 1 569 071 discloses and claims a high temperature nickel-based alloy known commercially as INCONEL alloy 618 (INCONEL is a trademark). The alloy was developed for use in high temperature gas cooled reactor (HTGR) applications, and exhibits high temperature strength and oxidation resistance, structural stability and weldability. In order to weld INCONEL alloy 618 to itself or to other alloys it is necessary to provide welding consumables such as filler wire and coated welding electrodes. As a filler wire any alloy selected should be suitable for welding with all major arc-welding processes, e.g., gas tungsten-arc, gas metal-arc, submerged-arc, and be capable of producing sound welded joints under conditions imposing severe restraint and difficult parameters for both thin and heavy section welds. Since continuous high deposition-rate welding processes are normally employed in industry, the filler metal must be readily available in forms such as wire. Commercially this means that the filler metal must be at least hot workable, and preferably cold workable allowing the thin cross section wire predominantly used in continuous high deposition rate welding processes to be produced. Similar characteristics are required if the alloy is to be used as core wire in a coated electrode.

It has been found that when INCONEL alloy 618 itself is used as core wire or filler metal, weldments produced are defective, undesirable fissuring being present. Since alloy 618 is for use in high temperature and pressure applications it is necessary to produce a welding alloy for use as core wire of a coated electrode, or as a filler metal which is compatible with the strength and stability characteristics of INCONEL alloy 618.

The present invention is based on the discovery that by modifying the nickel-chromium tungsten base of alloy 618 by the addition of manganese, molybdenum and niobium there is provided a welding alloy which has similar strength and stability to alloy 618 and provides a sound fissure-free weld deposit.

A welding alloy according to the present invention consisting of 21.9 to 24.5% chromium, 5.75 to 7% tungsten, 3 to 5% molybdenum, 1.4 to 2.5% niobium, 1 to 3% manganese, 0.05 to 0.11% carbon, 0 to 5% iron, 0 to 0.6% titanium, 0 to 0.03% magnesium, 0 to 0.005% boron, the balance apart from incidental elements and impurities being nickel.

Incidental elements and impurities may consist of up to 0.015% sulphur, 0 to 0.75% silicon, 0 to 0.50% copper, 0 to 0.25% aluminium, 0 to 0.50% cobalt and 0 to 0.02% phosphorus. Since commercially available niobium generally contains a substantial proportion of tantalum, this element may also be present. All percentages herein are by weight.

The presence of manganese aids in reducing fissuring but should be limited to a maximum of 3% to avoid adversely affecting stress-rupture life. In the past molybdenum was used in welding alloys because it was believed that it imported a tolerance for other elements, for example boron, which might detrimentally affect the weldability characteristics of the alloy. However it has now been found that, in the range 3 to 5% molybdenum aids the fissure resistant characteristics of the welding alloy. Niobium, like manganese also reduces fissuring of nickel-based alloys.

The welding alloy of the present invention gives fissure-resistant welds when used in gas tungsten arc welding (known as GTAW or TIG) and gas metal-arc welding (GMAW or MIG). The welds give room temperature tensile and stress properties corresponding closely to those exhibited by INCONEL alloy 618. The alloy may be used in both bare wire and coated forms, when it is used in conjunction with a suitable conventional flux coating.

According to one aspect of the present invention, an alloy for use as a bare wire filler metal consists of 21.9 to 24.5% chromium, 5.75 to 7% tungsten, 3 to 5% molybdenum, 1.4 to 2.5% niobium, 1 to 3% manganese, 0.05 to 0.11% carbon, 0.3 to 0.6% titanium, 0.01 to 0.03% magnesium, 0.001 to 0.005% boron, the balance apart from incidental elements and impurities being nickel.

A preferred composition for bare wire, or core wire for a coated electrode consists of 23.5% chromium, 6.5% tungsten, 4.0% molybdenum, 2.0% niobium plus tantalum, 2.0% manganese, 0.08% carbon, 0.45% titanium, 0.02% magnesium, 0.002% boron, the impurities and incidental elements being iron, silicon, sulphur, copper, aluminium, cobalt and phosphorus as low as possible, the balance being nickel.

Table I illustrates the difference in composition between an average composition for alloy 618 and for the present invention.

TABLE I

Composition in weight percent

| | Welding alloy | Alloy 618 |
|---|---|---|
| C | 0.08 | 0.035 |
| Mn | 2.0 | Low |
| Fe | 2.0 | 14.0 |
| Ni | 60.0 | 55.0 |
| Cr | 23.5 | 23.0 |
| Mo | 4.0 | Low |
| Nb(+Ta) | 2.0 | Low |
| W | 6.5 | 6.0 |

Some examples will now be described. Table II gives the compositions of thirty-two alloys tested, of which alloys A to S are outside the invention and alloys 1 to 13 are inside the invention. Alloys A to O are modifications to the commercial Alloy 618 composition in which additions of manganese, molybdenum and niobium (+tantalum) have been made to the basic composition. None gave satisfactory welds. In alloys P to S the iron content was reduced but the manganese and/or molybdenum are outside the preferred range. Again welds were found to be unsatisfactory. Alloys 1 to 13 gave satisfactory welds, those of alloys 9, 10 and 11 being preferred. These alloys were used to make gas metal-arc welds which were free from fissures. Gas tungsten-arc welds and coated electrodes were also made from these alloys, the later when used in conjunction with suitable flux. One flux used successfully had the composition:—

| | |
|---|---|
| Nickel-niobium | 5% |
| Manganese metal | 4% |
| Calcium carbonate ($CaCO_3$) | 30% |
| Cryolite ($Na_3AlF_6$) | 25% |
| Rutile ($TiO_2$) | 20% |
| Bentonite | 4% |
| 80% $Al_2O_3$—20% $SiO_2$ compound | 12% |
| Sodium silicate binder | 1 part per 20 parts dry weight |

3

TABLE II

| Alloy | C | Mn | Fe | S | Si | Cu | Ni | Cr | Al | Ti | Mg | Co | Mo | Nb+Ta | W | P | B |
|---|---|---|---|---|---|---|---|---|---|---|---|---|---|---|---|---|---|
| A | .06 | 3.93 | 16.05 | .008 | .36 | .04 | 49.43 | 19.49 | .01 | .06 | — | .22 | 3.82 | 1.95 | 4.54 | .011 | — |
| B | .06 | 3.48 | 12.84 | .007 | .39 | .04 | Bal. | 22.76 | .04 | .07 | — | .21 | 3.18 | 1.72 | 5.91 | .011 | — |
| C | .06 | 2.06 | 15.23 | .010 | .37 | .04 | Bal. | 19.45 | — | — | — | .22 | 4.27 | 2.50 | 4.57 | .011 | — |
| D | .06 | .06 | 15.61 | .012 | .35 | .04 | Bal. | 19.58 | — | — | — | .23 | 4.31 | 1.84 | 4.64 | .011 | — |
| E | .06 | 1.97 | 13.63 | .008 | .40 | .05 | Bal. | 23.22 | .03 | .08 | — | .22 | 3.79 | 1.97 | 4.39 | .011 | — |
| F | .06 | 2.12 | 13.35 | .008 | .24 | .03 | Bal. | 24.72 | .01 | .06 | — | .23 | .12 | .01 | 4.57 | .009 | — |
| G | .06 | 2.17 | 12.88 | .008 | .35 | .03 | Bal. | 24.21 | .02 | .08 | — | .22 | .12 | 2.07 | 4.53 | .009 | — |
| H | .06 | 1.81 | 13.64 | .011 | .27 | .05 | Bal. | 26.90 | .02 | .06 | — | .22 | 3.72 | .02 | 4.50 | .011 | — |
| I | .06 | 1.88 | 13.20 | .010 | .37 | .05 | Bal. | 26.58 | .02 | .07 | — | .21 | 3.59 | 1.85 | 4.36 | .012 | — |
| J | .15 | 1.89 | 13.54 | .009 | .38 | .05 | Bal. | 23.79 | .02 | .07 | — | .22 | 3.48 | 1.90 | 4.63 | .011 | — |
| K | .24 | 1.91 | 13.41 | .010 | .34 | .05 | Bal. | 24.75 | .01 | .08 | — | .22 | 3.60 | 1.95 | 4.52 | .012 | — |
| L | .06 | 1.75 | 13.12 | .009 | .41 | .05 | Bal. | 23.01 | .02 | .07 | — | .21 | 3.21 | 1.58 | 6.24 | .011 | — |
| M | .06 | 2.31 | 12.95 | .008 | .42 | .02 | Bal. | 22.86 | .03 | .07 | — | .21 | 2.98 | 1.57 | 6.18 | .011 | — |
| N | .08 | 1.82 | 13.61 | .010 | .38 | .06 | Bal. | 23.39 | .02 | .08 | — | — | 3.43 | 1.82 | 4.83 | .011 | — |
| O | .11 | 1.84 | 13.53 | .009 | .38 | .06 | Bal. | 23.60 | .01 | .08 | — | — | 3.48 | 1.86 | 4.85 | .011 | — |
| P | .02 | .08 | 13.84 | .004 | .13 | .02 | 55.51 | 23.08 | .02 | .35 | .009 | .10 | .06 | <.01 | 6.08 | .010 | — |

0 051 979

TABLE II (contd.)

| Alloy | C | Mn | Fe | S | Si | Cu | Ni | Cr | Al | Ti | Mg | Co | Mo | Nb+Ta | W | P | B |
|---|---|---|---|---|---|---|---|---|---|---|---|---|---|---|---|---|---|
| Q | .10 | 3.55 | .71 | .007 | .27 | .03 | Bal. | 24.48 | — | — | — | — | 5.14 | 1.77 | 5.79 | .006 | — |
| R | .02 | 3.94 | .38 | .004 | .12 | .04 | 58.30 | 24.35 | <.01 | .10 | — | — | 4.33 | 2.11 | 6.23 | .001 | — |
| S | .06 | 1.96 | .22 | .003 | .09 | <.01 | Bal. | 22.97 | .37 | .39 | .022 | .02 | 4.10 | 1.13 | 6.44 | — | .002 |
| 1 | .06 | 2.06 | .99 | .008 | .20 | .12 | 62.70 | 22.49 | .01 | .08 | — | — | 3.74 | 1.57 | 6.06 | .005 | — |
| 2 | .07 | 1.91 | .10 | .003 | .04 | .14 | Bal. | 23.45 | .004 | .19 | — | .014 | 3.97 | 1.96 | 6.20 | .002 | — |
| 3 | .08 | 2.02 | 1.08 | .006 | .23 | .07 | 62.03 | 21.94 | .01 | .09 | — | — | 3.72 | 1.55 | 6.03 | .004 | — |
| 4 | .11 | 1.92 | .16 | .004 | .05 | .09 | Bal. | 23.40 | .005 | .25 | — | .014 | 4.00 | 1.98 | 6.52 | .003 | — |
| 5 | .07 | 1.90 | 1.20 | .004 | .07 | <.01 | Bal. | 22.96 | .12 | .45 | .005 | .37 | 3.73 | 2.14 | 6.06 | — | .002 |
| 6 | .07 | 1.94 | .18 | .004 | .08 | <.01 | Bal. | 23.25 | .30 | .38 | .001 | .02 | 4.13 | 2.79 | 6.46 | — | .002 |
| 7 | .06 | 1.97 | .12 | .004 | .07 | <.01 | Bal. | 23.03 | .03 | .42 | .003 | .02 | 3.10 | 2.06 | 6.48 | — | .002 |
| 8 | .06 | 1.98 | .10 | .003 | .06 | <.01 | Bal. | 23.06 | .02 | .48 | .009 | .02 | 4.92 | 1.98 | 6.52 | — | .001 |
| 9 | .04 | 1.94 | .32 | .006 | .07 | <.01 | Bal. | 22.08 | .01 | .29 | .010 | .01 | 3.37 | 1.46 | 5.77 | — | — |
| 10 | .06 | 1.98 | 1.79 | .005 | .06 | .04 | 59.96 | 23.54 | .02 | .40 | .025 | .02 | 3.90 | 1.75 | 6.06 | — | — |
| 11 | .10 | 2.03 | 1.02 | .004 | .06 | .01 | 59.50 | 23.89 | <.01 | .37 | .014 | .02 | 4.51 | 2.43 | 5.96 | — | — |
| 12 | .05 | 1.94 | 1.89 | .006 | .52 | .05 | 61.32 | 21.92 | .02 | .09 | — | .02 | 4.07 | 1.75 | 6.33 | — | — |
| 13 | .07 | 1.97 | 1.10 | .006 | .56 | .02 | 60.84 | 22.23 | .03 | .09 | — | 02 | 4.69 | 2.11 | 6.25 | — | — |

# 0 051 979

Table III shows the results of testing three 45.36 kg heats processed to 0.16 cm spooled wire and 0.32 cm straight lengths. Three processes were used to make welds, gas tungsten-arc (GTAW), gas metal-arc (GMAW) and shielded metal-arc (SMAW) (coated electrode). The flux disclosed above was used in the latter welding process. Alloy 9 represents, probably, the lowest acceptable combination of chromium, molybdenum and niobium whereas alloy 11 represents, probably the highest acceptable combination of these alloying elements. Alloy 10 represents an acceptable mid range alloy.

### TABLE III
Room temperature tensile and stress rupture properties of weldments

| Alloy | Process* | Room temperature tensile properties | | | | Stress rupture life 1000°C/34.47 N/mm² | |
|---|---|---|---|---|---|---|---|
| | | Yield str. N/mm² | Tensile str. N/mm² | Elong. % | Red. of area % | Life hrs. | Elong. % |
| 9 | GTA | — | — | — | — | 51.2 | 3.0 |
| 9 | GMA | 446.1 | 712.2 | 43.5 | 43.4 | 60.7 | 2.5 |
| 10 | GTA | 524.0 | 800.5 | 28.0 | 48.1 | 85.1 | 3.1 |
| 10 | GMA | 452.3 | 757.0 | 41.0 | 48.6 | 67.2 | 10.9 |
| 12 | SMA | 479.2 | 768.8 | 40.0 | 34.5 | 97.2 | 6.6 |
| 11 | GTA | 519.9 | 809.4 | 36.0 | 39.9 | 205.3 | 2.3 |
| 11 | GMA | 471.6 | 789.4 | 36.0 | 39.6 | 150.0 | 5.0 |
| 13 | SMA | 511.6 | 819.1 | 34.0 | 31.4 | 70.1 | 3.5 |

*GTA=gas Tungsten-Arc, GMA=Gas Metal-Arc, SMA=Shielded Metal-Arc.

Tensile strength ranged from 712.2 N/mm² to 819.1 N/mm². Stress rupture life ranged from 51.2 to 205.3 hours. Low levels of carbon, chromium, molybdenum, niobium and tungsten in alloy 9 were reflected in the low strength and rupture life of the alloy. The high level of these elements in alloy 9 increased its strength properties and reduced the elongation to the 30% range. The shielded metal-arc results were borderline at 31.4% and the bare wire results higher at 39.6% and 39.8%. Since alloy 5 has intermediate levels of these elements, further tests were carried out to determine its properties. The impact strength of alloy 5 was determined after exposure at 816°C and 982°C for 100 hours. The as-welded strength was 134.7 joules. Results are shown in Table IV.

### TABLE IV
Average impact strength of exposed alloy 5 weld deposits
(GTA welds—charpy V notch)

| Condition | Average impact results (J) |
|---|---|
| As-welded | 134.7 |
| 816°C/100 hrs. | 120.4 |
| 982.2°C/100 hrs. | 126.1 |

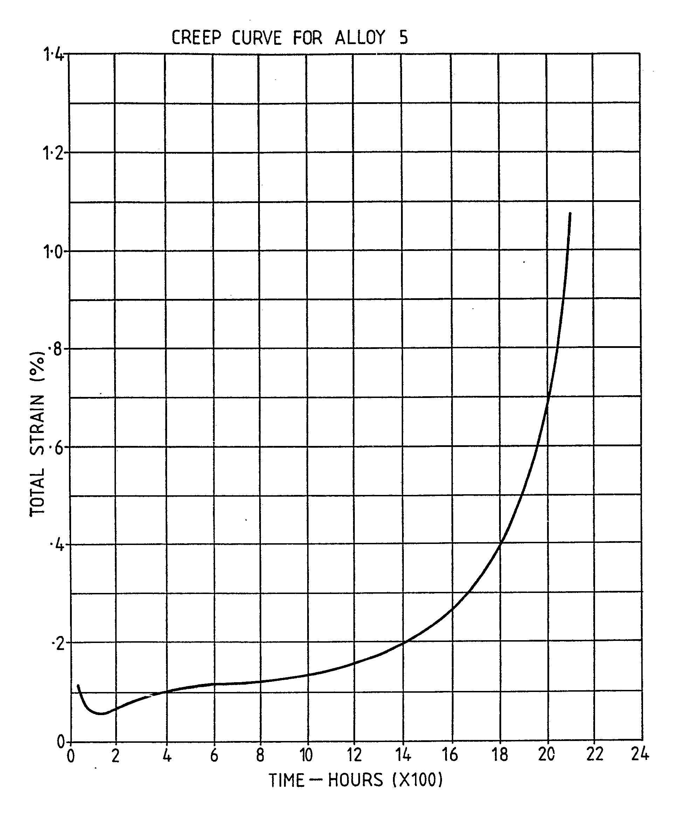

A creep rupture test was performed on all-weld-metal sample of alloy 5 at 1000°C and 10.34 N/mm². The accompanying drawing shows the resultant strain curve of the sample under these test conditions. The resulting creep rate was 0.00014 cm/hr. An accelerated rate of strain is exhibited after about 1500 hours, and may be undesirable. A corresponding phenomenon has been observed in occasional commercial heats of INCONEL alloy 618. Although not debilitating, this may necessitate discretion in some applications.

These tests show that room temperature tensile strength, stress-rupture life and creep rate of the modified alloy filler and core wire composition are comparable to the base metal properties.

It will be appreciated by those skilled in the welding art that the welding alloys of the present invention may be used as a bare wire filler metal or core wire of a coated electrode for welding alloys other than INCONEL alloy 618.

6

**Claims**

1. A welding alloy for welding nickel-based alloys consisting of 21.9 to 24.5% chromium, 5.75 to 7% tungsten, 3 to 5% molybdenum, 1.4 to 2.5% niobium, 1 to 3% manganese, 0.05 to 0.11% carbon, 0 to 5% iron, 0 to 0.6% titanium, 0 to 0.030% magnesium, 0 to 0.005% boron the balance apart from incidental elements and impurities being nickel.

2. A welding alloy according to claim 1 for use as a bare wire filler metal consisting of 21.9 to 24.5% chromium, 5.75 to 7% tungsten, 3 to 5% molybdenum, 1.4 to 2.5% niobium, 1 to 3% manganese, 0.05 to 0.11% carbon, 0.3 to 0.6% titanium, 0.01 to 0.03% magnesium, 0.001 to 0.005% boron, the balance apart from incidental elements and impurities being nickel.

3. A welding alloy according to claim 1 for use as a bare wire filler metal or as the core wire of a coated electrode consisting of 23.5% chromium, 4% molybdenum, 6.5% tungsten, 2.0% niobium (plus tantalum), 2.0% manganese, 0.08% carbon, 0.45% titanium, 0.02% magnesium, 0.002% boron, the impurities and incidental elements iron, silicon, sulphur, copper, aluminium, cobalt and phosphorus as low as possible, the balance being nickel.

**Patentansprüche**

1. Eine Schweißlegierung zum Schweißen von Nickelbasislegierungen, bestehend aus 21,9 bis 24,5% Chrom, 5,75 bis 7% Wolfram, 3 bis 5% Molybdän, 1,4 bis 2,5% Niob, 1 bis 3% Mangan, 0,05 bis 0,11% Kohlenstoff, 0 bis 5% Eisen, 0 bis 0,6% Titan, 0 bis 0,030% Magnesium, 0 bis 0,005% Bor, Rest Nickel mit Ausnahme von Spurenelementen und Verunreinigungen.

2. Eine Schweißlegierung gemäß Anspruch 1 zur Verwendung als blanker Zusatzdraht, bestehend aus 21,9 bis 24,5% Chrom, 5,75 bis 7% Wolfram, 3 bis 5% Molybdän, 1,4 bis 2,5% Niob, 1 bis 3% Mangan, 0,05 bis 0,11% Kohlenstoff, 0,3 bis 0,6% Titan, 0,01 bis 0,03 Magnesium, 0,001 bis 0,005% Bor, Rest Nickel mit Ausnahme von Spurenelementen und Verunreinigungen.

3. Eine Schweißlegierung gemäß Anspruch 1 für Verwendung als blanker Zusatzdraht oder als Kerndraht für umhüllte Elektroden, bestehend aus 23,5% Chrom, 4% Molybdän, 6,5% Wolfram, 2,0% Niob (plus Tantal), 2,0% Mangan, 0,08% Kohlenstoff, 0,45% Titan, 0,02% Magnesium, 0,002% Bor, den Spurenelementen und Verunreinigungen Eisen, Silicium, Schwefel, Kupfer, Aluminium, Kobalt und Phosphor in geringstmöglichen Anteilen, und als Rest Nickel.

**Revendications**

1. Alliage pour soudure pour souder des alliages à base de nickel constitué de 21,9 à 24,5% de chrome, de 5,75 à 7% de tungstène, de 3 à 5% de molybdène, de 1,4 à 2,5% de niobium, de 1 à 3% de manganèse, de 0,05 à 0,11% de carbone, de 0 à 5% de fer, de 0 à 0,6% de titane, de 0 à 0,030% de magnésium, de 0 à 0,005% de bore, le complément en dehors des éléments accidentels et des impuretés étant du nickel.

2. Alliage pour soudure selon la revendication 1 à utiliser comme métal de soudure en forme de fil nu constitué de 21,9 à 24,5% de chrome, de 5,75 à 7% de tungstène, de 3 à 5% de molybdène, de 1,4 à 2,5% de niobium, de 1 à 3% de manganèse, de 0,05 à 0,11% de carbone, de 0,3 à 0,6% de titane, de 0,01 à 0,03% de magnésium, de 0,001 à 0,005% de bore, le complément en dehors des éléments accidentels et des impuretés étant du nickel.

3. Alliage pour soudure selon la revendication 1 à utiliser comme métal de soudure en forme de fil nu ou comme fil central d'une électrode enrobée constitué de 23,5% de chrome, de 4% de molybdène, de 6,5% de tungstène, de 2,0% de niobium (plus tantale), de 2,0% de manganèse, de 0,08% de carbone, de 0,45% de titane, de 0,02% de magnésium, de 0,002% de bore, les impuretés et les éléments accidentels fer, silicium, soufre, cuivre, aluminium, cobalt et phosphore étant présents dans une quantité aussi faible que possible, le complément étant du nickel.

CREEP CURVE FOR ALLOY 5

TOTAL STRAIN (%)

TIME — HOURS (X100)